# EUROPEAN PATENT SPECIFICATION

(11) **EP 1 500 550 B1**
(45) Date of publication and mention of the grant of the patent: **20.01.2010**
(21) Application number: 04017321.3
(22) Date of filing: 22.07.2004
(51) Int. Cl.: B60N 2/12, B60N 2/20, B60N 2/30

(54) **Seat device**
Sitzvorrichtung
Dispositif pour siège

(30) Priority: 23.07.2003 JP 2003200566
(43) Date of publication of application: 26.01.2005
(73) Proprietor: AISIN SEIKI KABUSHIKI KAISHA, Kariya-shi, Aichi-ken 448-8650 (JP)
(72) Inventor: Yamada, Yukifumi, 2-chome Kariya-shi Aichi-ken 448-8650 (JP); Okazaki, Hiroyuki, 2-chome Kariya-shi Aichi-ken 448-8650 (JP)
(74) Representative: TBK-Patent

(56) References cited:
- GB-A- 2 336 772
- US-A- 6 152 533

## Description

### FIELD OF THE INVENTION

This invention generally relates to a vehicle seat device structured to be foldable in order to, for example, expand a loading space.

### BACKGROUND

A known seat device, for example, is described in JP2002-154359A2. The known seat device is structured that a seatback serving as a backrest is foldable on a seat cushion serving as a sitting portion in order to, for example, expand a loading space. In particular, the known foldable seat device is structured to extend the loading space further by moving the seat cushion downward in cooperation with a rotational operation of the seatback to the folded state of the seat device.

However, the seat cushion may be interfered with a projected portion of a wheel housing portion provided at both ends of a vehicle floor, or a stepped portion provided on the vehicle floor under a seat not to fold the seatback and not to move the seat cushion downward. Because a foldable or an unfoldable positions are not distinguished with the known seat device, an operator has to try folding the seat device only to find that the seat device is at the unfoldable position thereof because the seat cushion is interfered with the projected portion. Then the operator has to horizontally move the seat device to fold the seat device. Thus, with the known seat device, folding operation is complex and irritating.

US 6 152 533 shows a seat device having the features of the preamble of claim 1.

A need thus exists for a seat device that a foldable and an unfoldable position thereof are automatically distinguished and is foldable by simple operation.

### SUMMARY OF THE INVENTION

According to an aspect of the present invention, a seat device includes a seat cushion, a seatback being rotatable relative to the seat cushion from a position within an adjusting angle range to a position at the folded state on the seat cushion, a seat sliding device for supporting the seat cushion on a floor to adjust the seat cushion in a back and forth direction, and a linking mechanism for moving the seat cushion downward in cooperation with a rotational operation of the seatback to the folded state. The seat device includes an engaging mechanism for prohibiting the rotational operation of the seatback to the folded state unless the seat sliding device is positioned at a predetermined position.

According to the present invention, an unfoldable position of a seat where the seatback can not be folded on the seat cushion and the seat cushion can not move downward because of an interference with a wheel housing portion on the vehicle floor or a stepped portion of the floor under the seat is automatically and clearly distinguished from a foldable position of the seat device by prohibiting a movement of the seatback to the folded state, which simplifies a folding operation of the seat. In addition, according to the invention, the construction only requires a small number of components for the engaging mechanism.

### BRIEF DESCRIPTION OF THE DRAWINGS

The foregoing and additional features and characteristics of the present invention will become more apparent from the following detailed description considered with reference to the accompanying drawings, wherein:
Fig. 1 shows a side view of a seat device at a sitting state according to the present invention.
Fig. 2 shows a side view of the seat device at folded state according to the present invention.
Fig.3 shows a side view of the seat device according to an embodiment of the present invention.

### DETAILED DESCRIPTION

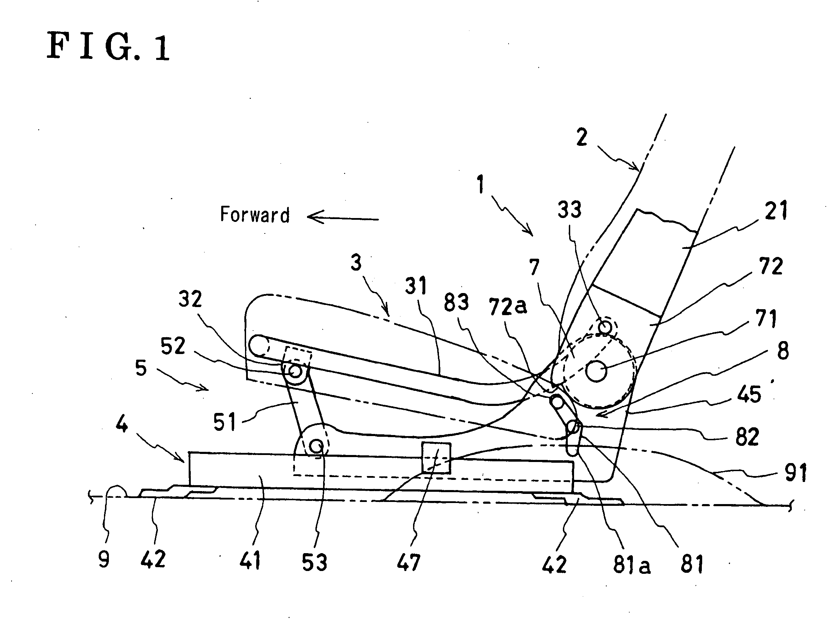

One embodiment of the present invention will be explained with reference to the illustrations of the drawing Figs. 1-3 as follows.

As illustrated in Fig. 1, a seat device 1 includes a seatback 2 serving as a backrest portion and a seat cushion 3 serving as a sitting portion. The seat cushion 3 includes a cushion frame 31 extended in a back and forth direction (side to side direction in Fig. 1) and serving as a supporting member having function of strength of the seat cushion 3.

The seat device 1 is attached on a vehicle floor 9. The seat device 1 includes a seat sliding device 4 for adjusting a position of the seat device 1 in the back and forth direction. The seat sliding device 4 includes a lower rail 41 and an upper rail 45. The lower rail 41 is fixed at the floor 9 via an attaching bracket 42. The upper rail 45 is slidably engaged with and guided by the lower rail 41. The seat device 1 includes a locking system for adjusting and maintaining a position of the upper rail 45 relative to the lower rail 41.

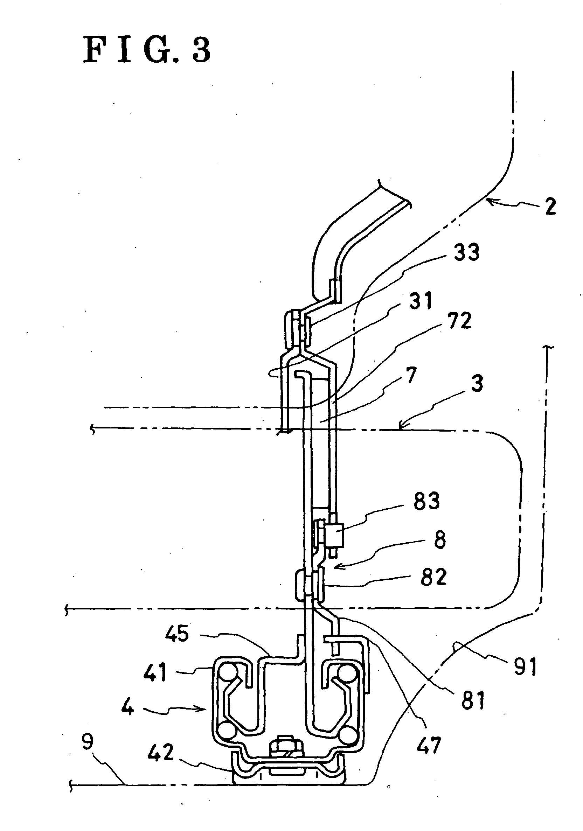

A rear end of the upper rail 45 stands upright. A reclining device 7 including a known mechanism is attached at the standing portion. As shown in Fig. 3, the reclining device 7 is provided between the upper rail 45 and a back frame 21 of the seatback 2. At a shown structure, a reclining angle of the seatback 2 about a rotation center 71 of the reclining device 7 relative to the upper rail 45 is adjusted freely and locked to an adjusted angle.

A rotational axis 53 is provided at a side surface of a front end of the upper rail 45. A first end of a link 51 is attached at the rotational axis 53 so that the seat cushion 3 is vertically movable. A bracket 32 is fixed at a front end of the cushion frame 31. A rotational axis 52 is attached at a side surface of the bracket 32. A second end of the link 51 is rotatably attached at the rotational axis 52. A rear end of the cushion frame 31 is rotatably supported via a rotational axis 33 provided at an upper arm 72 connected to the back frame 21 of the reclining device 7.

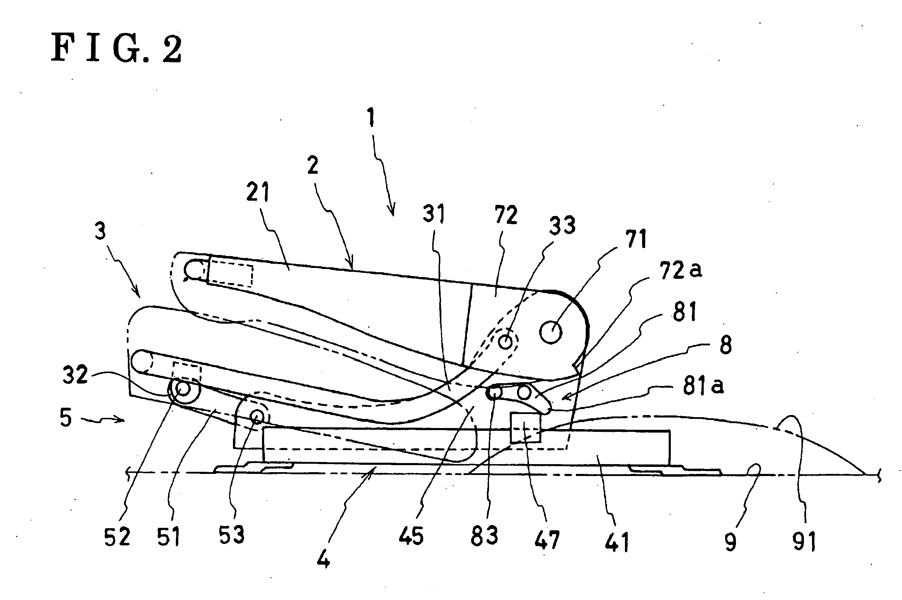

The seat cushion 3 forms a tetragonal shape with the cushion frame 31, the upper arm 72, the upper rail 45 and the link 51. A connecting portion of an each side of the tetragonal shape forms a tetragonal linking mechanism 5 formed with the rotation axes 32, 52, 53 and the rotational center 71 of the reclining device 7. With the construction of the seat device 1, the seat cushion 3 is configured to move downward maintaining a predetermined angle by the operation of the linking mechanism 5 when a state of the seat device 1 is changed from a sitting state (shown in Fig. 1) to the folded state in which the seatback 2 is folded on the seat cushion 3 by an operation of the reclining device 7 (shown in Fig. 2).

The foldable seat device 1 is generally provided at a rear seat for a vehicle. When the seat device 1 is at the folded state, luggage, or the like, can be loaded on a rear surface of the seatback 2. As explained above, with the construction that the seat cushion 3 is moved downward to become the folded state, a larger space for luggage, or the like, becomes available on the rear surface of the seatback 2. However, as shown in Fig. 1-3, there is a partially projected portion of a wheel housing 91 projected from the floor 9 at a rear portion of a vehicle chamber. The projected portion of the wheel housing 91 contacts the seat cushion 3 to prohibit the movement of the seat cushion 3.

The seat device 1 of the present invention automatically distinguishes that the seat position is at the foldable position. For this purpose, the seat device 1 includes an engaging mechanism 8. The engaging mechanism 8 includes an engaging member 47 and a lever 81. The engaging member 47 is attached at a predetermined position of the lower rail 41 of the seat sliding device 4. The lever 81 is rotatably supported at a side surface of the upper rail 45 to rotate counterclockwise to contact the engaging member 47(shown in Fig. 2). The lever 81 is biased to rotate clockwise by a spring member. Thus, a pin 83 provided at a one end of the lever 81 is positioned in a rotational path of a stepped portion 72a provided at a lower end of the upper arm 72 of the reclining device 7 to prohibit the seatback 2 being the folded state. Meanwhile, the lever 81 is rotated counterclockwise as shown in Fig. 2 by engaging with the engaging member 47 with a forward sliding action of the upper rail 45. Thus the pin 83 deviates from the rotational path of the stepped portion 72a to permit the seatback 2 to be the folded state.

With the construction described above, a setting of an proper position for the engaging member 47 relative to the lower rail 41 permits the seat cushion 3 to be moved downward. The seat cushion 3 is moved to fold the seatback 2 at the predetermined position not contacting the wheel housing 91.

The operation of the seat device 1 described above is explained as follows.

An adjustable angle range of the reclining of the seatback 2 at the sitting state is defined between an angle that the step portion 72a engages with the pin 83, in other words, a forward limit, and an angle determined by a stopper, in other words, a rear limit. The angle of the backrest of the seatback 2 can be adjusted within the adjustable angle range by operating the reclining device 7.

Meanwhile, as shown in Fig. 2, in case that the seat device 1 is moved forward by the operation of the seat sliding device 4, the lever 81 is engaged with the engaging member 47 to rotate. The pin 83 provided at one end of the lever 81 deviates from the rotational path of the step portion 72a, and the seatback 2 is permitted to recline. If a lock of the reclining device 7 is released at this state, the seatback 2 is folded on the seat cushion 3. And the seat cushion 3 moves downward by the operation of the linking mechanism 5 along with the folding operation of the seatback 2. At the position that the wheel housing 91 does not interfere with the seat cushion 3, the folding operation of the seat device 1 is accomplished.

With the foregoing construction, the lever 81 is provided to engage with the engaging member 47 at a position that the upper rail 45 is at the forefront position. However, an engaging position of the lever 81 with the engaging member 47 is not limited to the position that the upper rail 45 is at the forefront position. For example, an engaging member may be provided at a vehicle side in order that the seat cushion 3 is folded by avoiding an interfering portion which interferes with the seat cushion 3 moving downward.

As explained above, the unfoldable position of the seat where the seatback 2 can not be folded on the seat cushion 3 and the seat cushion 3 can not move downward because of the interference with the wheel housing portion 91 on the vehicle floor or a stepped portion of the floor under the seat is automatically and clearly distinguished from the foldable position of the seat device 1 by prohibiting the movement of the seatback 2 to the folded state, which simplifies folding operation of the seat. In addition, the construction in the embodiment only requires a small number of components for the engaging mechanism 8.

The principles, preferred embodiment and mode of operation of the present invention have been described in the foregoing specification. However, the invention which is intended to be protected is not to be construed as limited to the particular embodiment disclosed. Further, the embodiments described herein are to be regarded as illustrative rather than restrictive.

A seat device includes a seat cushion, a seatback being rotatable relative to the seat cushion from a position within an adjusting angle range to a folded position on the seat cushion, a seat sliding device for supporting the seat cushion on a floor to adjust the seat cushion in a back and forth direction, and a linking mechanism for moving the seat cushion downward in cooperation with a rotational operation of the seatback to the folded position. The seat device includes an engaging mechanism for prohibiting the rotational operation of the seatback to the folded position unless the seat sliding device is positioned at a predetermined position.

## Claims

1. A seat device (1) comprising:
a seat cushion (3);
a seatback (2) being rotatable relative to the seat cushion (3) from a position within an adjusting angle range to a position at a folded state on the seat cushion (3);
a seat sliding device (4) for supporting the seat cushion (3) on a floor (9) to adjust the seat cushion (3) in a back and forth direction; and
a linking mechanism (5) for moving the seat cushion (3) downward in cooperation with a rotational operation of the seatback (2) to the folded state; **characterized in that**
the seat device (1) includes an engaging mechanism (8) for prohibiting the rotational operation of the seatback (2) to the folded state unless the seat sliding device (4) is positioned at a predetermined position at which the seat cushion (3) does not interfere with a wheel housing portion (91) or a stepped portion of the floor (9) when the seat cushion (3) is moved downward by means of the linking mechanism (5).

2. The seat device according to Claim 1, wherein
the seat sliding device includes a lower rail (41) fixed to the floor and an upper rail (45) slidably attached to the lower rail for supporting the seat cushion.

3. The seat device according to Claim 2, wherein
the engaging mechanism includes
an engaging member (47) attached to the lower rail of the sliding device, and
a prohibiting member (81) attached to the upper rail of the sliding device for prohibiting the rotational operation of the seatback to the folded state unless the seat sliding device is positioned at the predetermined position.

4. The seat device according to Claim 3, wherein
the seatback is relatively rotatably connected to the seat cushion by a reclining device (7) including an upper arm (72) having a stepped portion (72a), the upper arm being rotated in cooperation with the rotation of the seatback, and
the prohibiting member includes a lever (81) for engaging with the engaging member for being rotated, a pin (83) provided at the lever for prohibiting the rotational operation of the seatback by engaging with the stepped portion of the upper arm of the reclining device.

5. The seat device according to Claim 4, wherein
the seatback enables to be in the folded state when the pin of the lever provided at the upper rail of the sliding device is removed from a rotational path of the stepped portion of the upper arm of the reclining device by the rotation of the lever caused by an engagement of the engaging member with the lever when the upper rail slides forward relative to the lower rail.

6. The seat device according to Claim 5, wherein
the prohibiting member engages with the engaging member when the seat is positioned at the predetermined position.

7. The seat device according to Claim 6, wherein
the predetermined position is a position of the seat sliding device where an occupant is not seated on the seat cushion.

8. The seat device according to Claim 7, wherein
the seatback becomes the folded state in case the upper rail is positioned mostly forward relative to the lower rail.

9. The seat device according to Claim 1, wherein
the seat cushion (3) is moved to fold the seatback (2) at the predetermined position without contacting a wheel housing (91).

## Patentansprüche

1. Sitzvorrichtung (1) mit:
einem Sitzpolster (3);
einer Sitzlehne (2), die relativ zu dem Sitzpolster (3) von einer Position innerhalb eines Einstellwinkelbereichs zu einer Position bei einem gefalteten Zustand auf dem Sitzpolster (3) drehbar ist;
einer Sitzgleitvorrichtung (4) zum Stützen des Sitzpolsters (3) auf einem Boden (9), um das Sitzpolster (3) in einer Richtung nach vorn und nach hinten einzustellen; und
einem Verbindungsmechanismus (5) zum Bewegen des Sitzpolsters (3) nach unten in Zusammenarbeit mit einer Drehbetätigung der Sitzlehne (2) in den gefalteten Zustand;
**dadurch gekennzeichnet, dass**
die Sitzvorrichtung (1) einen Eingriffsmechanismus (8) zum Verhindern der Drehbetätigung der Sitzlehne (2) in den gefalteten Zustand hat, wenn nicht die Sitzgleitvorrichtung (4) bei einer vorbestimmten Position positioniert ist, an der das Sitzpolster (3) ein Radgehäuseabschnitt (91) oder einen gestuften Abschnitt des Bodens (9) nicht beeinträchtigt, wenn das Sitzpolster (3) mit Hilfe des Verbindungsmechanismus (5) nach unten bewegt wird.

2. Sitzvorrichtung gemäß Anspruch, wobei
die Sitzgleitvorrichtung eine untere Schiene (41), die an dem Boden fixiert ist, und eine obere Schiene (45) aufweist, die gleitfähig an der unteren Schiene zum Stützen des Sitzpolsters befestigt ist.

3. Sitzvorrichtung gemäß Anspruch 2, wobei
der Eingriffsmechanismus Folgendes aufweist:
ein Eingriffsbauteil (47), das an der unteren Schiene der Gleitvorrichtung angebracht ist, und
ein Verhinderungsbauteil (81), das an der oberen Schiene der Gleitvorrichtung zum Verhindern der Drehbetätigung der Sitzlehne in den gefalteten Zustand angebracht ist, wenn nicht die Gleitvorrichtung an der vorbestimmten Position positioniert ist.

4. Sitzvorrichtung gemäß Anspruch 3, wobei
die Sitzlehne durch eine Neigungsvorrichtung (7) mit einem oberen Arm (72), der einen gestuften Abschnitt (72a) hat, relativ drehbar mit dem Sitzpolster verbunden ist, wobei der obere Arm in Zusammenarbeit mit der Drehung der Sitzlehne gedreht wird, und
das Verhinderungsbauteil einen Hebel (81), um mit dem Eingriffsbauteil einzugreifen, um gedreht zu werden, und einen Zapfen (83) aufweist, der an den Hebel zum Verhindern der Drehbetätigung der Sitzlehne durch einen Eingriff mit dem gestuften Abschnitt des oberen Arms der Neigungsvorrichtung vorgesehen ist.

5. Sitzvorrichtung gemäß Anspruch 4, wobei
die Sitzlehne es ermöglicht, dass sie sich in dem gefalteten Zustand befindet, wenn der Zapfen des Hebels, der an der oberen Schiene der Gleitvorrichtung vorgesehen ist, von einem Drehweg des gestuften Abschnitts des oberen Arms der Neigungsvorrichtung durch die Drehung des Hebels entfernt wird, die durch einen Eingriff des Eingriffsbauteils mit dem Hebel verursacht wird, wenn die obere Schiene relativ zu der unteren Schiene nach vorn gleitet.

6. Sitzvorrichtung gemäß Anspruch 5, wobei
das Verhinderungsbauteil mit dem Eingriffsbauteil eingreift, wenn der Sitz an der vorbestimmten Position positioniert ist.

7. Sitzvorrichtung gemäß Anspruch 6, wobei
die vorbestimmte Position eine Position der Sitzgleitvorrichtung ist, an der ein Insasse nicht auf dem Sitzpolster sitzt.

8. Sitzvorrichtung gemäß Anspruch 7, wobei
die Sitzlehne den gefalteten Zustand in einem Fall annimmt, an dem die obere Schiene relativ zu der unteren Schiene am weitesten vorn positioniert ist.

9. Sitzvorrichtung gemäß Anspruch 1, wobei
das Sitzpolster (3) bewegt wird, um die Sitzlehne (2) an der vorbestimmten Position zu falten, ohne ein Radgehäuse (91) zu berühren.

## Revendications

1. Dispositif de siège (1) comprenant :
un coussin de siège (3) ;
un dossier de siège (2) rotatif par rapport au coussin de siège (3) d'une position au sein d'une plage d'angle de réglage à une position dans un état plié sur le coussin de siège (3) ;
un dispositif de coulissement de siège (4) destiné à supporter le coussin de siège (3) sur un plancher (9) pour régler le coussin de siège (3) dans une direction vers l'arrière et vers l'avant ; et
un mécanisme de liaison (5) destiné à déplacer le coussin de siège (3) vers le bas en coopération avec une opération de rotation du dossier de siège (2) jusqu'à l'état plié ; **caractérisé en ce que**
le dispositif de siège (1) comprend un mécanisme d'entrée en prise (8) destiné à empêcher l'opération de rotation du dossier de siège (2) jusqu'à l'état plié à moins que le dispositif de coulissement de siège (4) ne soit positionné dans une position prédéterminée dans laquelle le coussin de siège (3) ne gêne pas une partie de cage de roue (91) ou une partie épaulée du plancher (9) lorsque le coussin de siège (3) est déplacé vers le bas au moyen du mécanisme de liaison (5).

2. Dispositif de siège selon la revendication 1, dans lequel
le dispositif de coulissement de siège comprend un rail inférieur (41) fixé au plancher et un rail supérieur (45) fixé de façon coulissante au rail inférieur pour supporter le coussin de siège.

3. Dispositif de siège selon la revendication 2, dans lequel
le mécanisme d'entrée en prise comprend
un élément d'entrée en prise (47) fixé au rail inférieur du dispositif de coulissement, et
un élément d'empêchement (81) fixé au rail supérieur du dispositif de coulissement pour empêcher l'opération de rotation du dossier de siège jusqu'à l'état plié à moins que le dispositif de coulissement de siège ne soit positionné dans la position prédéterminée.

4. Dispositif de siège selon la revendication 3, dans lequel
le dossier de siège est relié de façon relativement rotative au coussin de siège par un dispositif d'inclinaison (7) comprenant un bras supérieur (72) comportant une partie épaulée (72a), le bras supérieur étant tourné en coopération avec la rotation du dossier de siège, et
l'élément d'empêchement comprend un levier (81) destiné à entrer en prise avec l'élément d'entrée en prise pour être tourné, une goupille (83) prévue sur le levier pour empêcher l'opération de rotation du dossier de siège en entrant en prise avec la partie épaulée du bras supérieur du dispositif d'inclinaison.

5. Dispositif de siège selon la revendication 4, dans lequel
le dossier de siège permet d'être dans l'état plié lorsque la goupille du levier prévue sur le rail supérieur du dispositif de coulissement est retirée d'un trajet de rotation de la partie épaulée du bras supérieur du dispositif d'inclinaison par la rotation du levier entraînée par une entrée en prise de l'élément d'entrée en prise avec le levier lorsque le rail supérieur coulisse vers l'avant par rapport au rail inférieur.

6. Dispositif de siège selon la revendication 5, dans lequel
l'élément d'empêchement entre en prise avec l'élément d'entrée en prise lorsque le siège est positionné dans la position prédéterminée.

7. Dispositif de siège selon la revendication 6, dans lequel
la position prédéterminée est une position du dispositif de coulissement de siège où un occupant n'est pas assis sur le coussin de siège.

8. Dispositif de siège selon la revendication 7, dans lequel
le dossier de siège prend l'état plié lorsque le rail supérieur est positionné le plus à l'avant par rapport au rail inférieur.

9. Dispositif de siège selon la revendication 1, dans lequel
le coussin de siège (3) est déplacé pour plier le dossier de siège (2) dans la position prédéterminée sans entrer en contact avec une cage de roue (91).
